# EUROPEAN PATENT APPLICATION

(11) **EP 3 168 190 A1**
(43) Date of publication of application: **17.05.2017**
(21) Application number: 15818302.0
(22) Date of filing: 02.07.2015
(51) Int. Cl.: C01B 33/107

(54) **METHOD FOR PURIFYING CHLOROSILANE**

(30) Priority: 10.07.2014 JP 2014142208
(71) Applicant: Shin-Etsu Chemical Co., Ltd., Tokyo 100-0004 (JP)
(72) Inventor: MIYAO, Shuichi, Joetsu-shi Niigata 942-8601 (JP); ISHIDA, Masahiko, Joetsu-shi Niigata 942-8601 (JP); YOSHIDA, Atsushi, Joetsu-shi Niigata 942-8601 (JP); NETSU, Shigeyoshi, Joetsu-shi Niigata 942-8601 (JP)
(74) Representative: WP Thompson
(86) International application number: PCT/JP2015/003325
(87) International publication number: WO 2016/006210

(57) **Abstract**

First, at least one of silanol and a siloxane compound is generated in a chlorosilane (S101). In the step, for example, an inert gas having a moisture concentration of 0.5 to 2.5 ppm is brought into contact with the chlorosilane to dissolve the moisture, and at least one of silanol and a siloxane compound is generated through a hydration reaction of a moiety of the chlorosilane. Next, a boron-containing compound contained in the chlorosilane is reacted with the silanol or the siloxane compound, thereby converting the boron-containing compound to a boron oxide (S102). Through the step (S102), the boron-containing compound being a low boiling point compound is converted to a boron oxide being a high boiling point compound, and therefore the difference in boiling point from the boiling point of chlorosilane becomes larger to make later separation easy.

## Description

### Technical Field

The present invention relates to a technique for purifying chlorosilanes, and more particularly, to a technique for purifying chlorosilanes by separating boron impurities or metal impurities from chlorosilanes without adding an adsorbent or the like.

### Background Art

Chlorosilanes including trichlorosilane (HSiCl₃) have been used since long ago as a raw material for high-purity polycrystalline silicon used for producing a silicon wafer or the like. As a synthesis method for obtaining trichlorosilane, Japanese Patent Laid-Open No. 56-73617 (Patent Literature 1) for example discloses the invention of a method for producing trichlorosilane in which silicon tetrachloride to be a by-product in the production of trichlorosilane is efficiently converted to trichlorosilane.

Besides, the methods for producing trichlorosilane as described below are known.

Japanese Patent Laid-Open No. 2-208217 (Patent Literature 2), Japanese Patent Laid-Open No. 9-169514 (Patent Literature 3), etc. disclose a direct method in which metallurgical grade silicon and hydrogen chloride are brought into contact with each other at a temperature of about 250°C or higher.

Japanese Patent Laid-Open No. 60-36318 (Patent Literature 4) discloses a method in which silicon tetrachloride is reacted with hydrogen in the presence of metallurgical grade silicon to reduce the silicon tetrachloride to trichlorosilane.

Japanese Patent Laid-Open No. 10-29813 (Patent Literature 5) discloses a method in which copper silicide is used in place of the metallurgical grade silicon, and silicon tetrachloride is reacted with hydrogen in the presence of copper silicide to reduce the silicon tetrachloride to trichlorosilane.

Now, the impurities such as phosphorus and boron act as a donor or an acceptor in the silicon crystal, and therefore these dopant components, when contained in polycrystalline silicon as a raw material for semiconductor production, are taken in a silicon wafer as a final product. Therefore, high-purity chlorosilanes obtained through precision distillation are used in producing semiconductor grade polycrystalline silicon.

In addition to simple distillation methods, a method for removing an impurity by adsorption, the method including passing liquid through various kinds of adsorbents such as silica gel and activated carbon, and a method for removal by separation, wherein the dopant component described above is converted in advance to a easily separable form using a getter or the like before distillation of trichlorosilane are proposed (see, for example, Japanese Patent Laid-Open No. 2004-250317 (Patent Literature 6)) relating to the technique for producing such high-purity chlorosilanes.

These purification methods are appropriately selected depending on various matters such as a concentration range of an impurity component to be removed, purification costs, and operability.

A large amount of boron compound is contained in metallurgical grade silicon. Therefore, when chlorosilanes are produced using metallurgical grade silicon as a raw material, the concentration of the boron impurity in the chlorosilanes obtained reaches about some ppm.

However, when polycrystalline silicon is produced using, as a raw material, chlorosilanes containing a boron impurity in such a high concentration, boron is taken in the polycrystalline silicon as an impurity, and the boron acts as an acceptor to deteriorate the product quality greatly.

From such circumstances, various methods have been proposed as a method for removing boron impurities in chlorosilanes.

As one of conventional methods for removing boron impurities in chlorosilanes, there is a method that includes a step of bringing a small amount of moisture into contact with a composition containing chlorosilanes. For example, Japanese Patent Laid-Open No. 2011-524328 (Patent Literature 7) discloses the invention in which, as "a method for reducing the boron content in the composition I containing at least one silicon halide", the "composition I" and "10 to 50 mg/Kg (ppm) of moisture" are brought into contact with each other, and it is mentioned that such "supply of moisture is conducted especially through an inert gas such as, for example, nitrogen, argon and/or hydrogen. In order to carry out the supply, usually liquid water, or preferably deionized water is homogenized with the inert gas at an elevated temperature, and especially heated to a temperature higher than 100°C completely without a liquid droplet. The resultant heated, wet inert gas is thereafter fed to the composition I under an elevated pressure. Preferably, the moisture is fed with nitrogen as a carrier gas."

It is mentioned that the invention disclosed in Patent Literature 7 is made in consideration of the disadvantage (high water amount that is required for complete conversion of boron trichloride using water) of the method and manners disclosed in German Published Unexamined Patent Application DE 1906197, and it is also mentioned that such excessive water amount "brings about, during complete removal of a boron-containing compound, strong silicification of facilities due to formation of SiO₂ and siloxane polymers; and a large amount of hydrogen chloride having a corrosive effect. Both the silicification and hydrogen chloride bring about increased material load for production facilities."

### Citation List

### Patent Literature

Patent Literature 1: Japanese Patent Laid-Open No. 56-73617
Patent Literature 2: Japanese Patent Laid-Open No. 2-208217
Patent Literature 3: Japanese Patent Laid-Open No. 9-169514
Patent Literature 4: Japanese Patent Laid-Open No. 60-36318
Patent Literature 5: Japanese Patent Laid-Open No. 10-29813
Patent Literature 6: Japanese Patent Laid-Open No. 2004-250317
Patent Literature 7: Japanese Patent Laid-Open No. 2011-524328

### Summary of Invention

### Technical Problem

However, in the method of removing an impurity by passing liquid through various kinds of adsorbents such as silica gel and activated carbon, the control of breakthrough characteristics, regeneration treatment, regular exchange, etc. of the adsorbent are necessary, the operations are complicated, and the efficiency is poor.

The method for removal by separation, wherein the boron impurity component is converted to an easily separable form in advance using a getter or the like also has problems that the same operations as those described above are necessary, and the efficiency is poor, and further costs become high.

Moreover, the invention disclosed in Patent Literature 7 specifies the content of moisture which is brought into contact with a composition to be purified to be "from 10 to 50 mg/kg (ppm)" in order not to make the water amount for removing a boron-containing compound excessive, but the moisture content is higher than the moisture content in a usual process gas, and therefore a step of "homogenizing liquid water, or preferably deionized water with an inert gas at an elevated temperature" to produce "heated, wet inert gas" becomes essential, and there is a problem that costs become higher due to the additional step.

The present invention has been made in consideration of these problems, and an object of the present invention is to provide a novel technique for separating and removing boron impurities and metal impurities at low cost and in a highly efficient manner in purification of chlorosilanes.

### Solution to Problem

In order to solve the problems, the method for purifying a chlorosilane according to the first invention is a method for purifying a chlorosilane by removing a boron-containing compound in the chlorosilane, comprising the following steps A to C:
step A of generating at least one of silanol and a siloxane compound in the chlorosilane;
step B of reacting a boron-containing compound contained in the chlorosilane with the silanol or the siloxane compound, thereby converting the boron-containing compound to a boron oxide; and
step C of distilling the chlorosilane to remove the boron oxide.

Preferably, step B is also a step of allowing the boron oxide to adsorb a metal-containing compound contained in the chlorosilane, thereby converting the metal-containing compound to an addition compound, and step C is also a step of removing the addition compound.

Moreover, the method for purifying a chlorosilane according to the second invention is a method for purifying a chlorosilane by removing a metal-containing compound in the chlorosilane, comprising the following steps D to F:
step D of generating at least one of silanol and a siloxane compound in the chlorosilane;
step E of allowing the silanol or the siloxane compound to adsorb the metal-containing compound contained in the chlorosilane, thereby converting the metal-containing compound to an addition compound; and
step F of distilling the chlorosilane to remove the addition compound.

In an aspect, in step A or step D, an inert gas having a moisture concentration of 0.5 to 2.5 ppm is brought into contact with the chlorosilane to dissolve the moisture, thereby generating at least one of the silanol and the siloxane compound through a hydration reaction of a moiety of the chlorosilane.

Furthermore, in another aspect, in step A or step D, an unpurified chlorosilane comprising at least one of silanol and a siloxane compound is added to the chlorosilane to generate at least one of the silanol and the siloxane compound in the chlorosilane.

For example, the unpurified chlorosilane is at least one of an unpurified chlorosilane obtained by reacting metallic silicon with hydrochloric acid, an unpurified chlorosilane obtained by reacting metallic silicon with silicon tetrachloride, and an unreacted chlorosilane obtained in synthesis of polysilicon using trichlorosilane as a raw material.

Moreover, for example, the boron-containing compound is at least one compound of a boron chloride and a boron hydride.

Furthermore, for example, the metal-containing compound is at least one chloride of chlorides of any one of iron, chromium, nickel, copper, zinc, aluminum, calcium, and magnesium.

For example, the chlorosilane has a single composition of any one of SiCl₄, SiHCl₃, SiH₂Cl₂, SiH₃Cl, and SiH₄, or has a mixed composition of a plurality of the single compositions.

### Advantageous Effects of Invention

According to the present invention, at least one of silanol and a siloxane compound are generated in a chlorosilane to be purified, and the silanol and/or the siloxane compound are allowed to adsorb a boron-containing compound or a metal-containing compound, thereby converting the compound to an addition compound, followed by removal of impurities, and therefore chlorosilanes can be purified at low cost and in a highly efficient manner without using an additional adsorbent or additive which has been used in conventional methods and, moreover, without including an additional step for supplying moisture, which has been included in the conventional methods.

### Brief Description of Drawings

[Figure 1] Figure 1 shows a flow chart for describing a step of removing a boron-containing compound by a method for purifying a chlorosilane according to the present invention.
[Figure 2] Figure 2 shows a flow chart for describing a step of removing a metal-containing compound by a method for purifying a chlorosilane according to the present invention.
[Figure 3] Figure 3 shows a mass spectrum obtained by analyzing a white powder in which impurities are adsorbed by TOF-SIMS.
[Figure 4] Figure 4 shows mapping images obtained by analyzing a white powder in which impurities are adsorbed by TOF-SIMS.

### Description of Embodiments

Hereinafter, the embodiments of the method for purifying a chlorosilane according to the present invention will be described with reference to accompanying drawings.

It is common knowledge that when chlorosilanes react with water, hydrochloric acid is generated to corrode purification facilities, and silanol (Si-OH) or siloxane (-Si-O-Si-) is also generated through the hydration reaction. The reaction of generating hydrochloric acid progresses rapidly, while the generation of silanol or the siloxane progresses relatively slowly and a polymer is formed before long to finally become powder or gel of SiO₂.

The present inventors have conducted studies on the method for removing a boron compound or a metal compound as an impurity contained in chlorosilanes to conceive an idea of removing these impurities by making use of silanol (Si-OH) or siloxane (-Si-O-Si-) generated through the hydration reaction.

The present inventors have taken notice of the fact that several ppm-level of moisture is contained even in an inert gas (such as N₂, H₂, or Ar), used in usual processes, the dew point of which is controlled, although moisture is not given in particular, and have studied on the possibility of removing the impurities by making use of the moisture. As a result, the present inventors have confirmed that the boron-containing compound being a low boiling point compound is converted to a boron oxide being a high boiling point compound through the reaction with the silanol or the siloxane compound in chlorosilanes generated by a low concentration of moisture, and that the metal-containing compound contained in chlorosilanes can be converted to an addition compound by allowing the silanol, the siloxane compound, or the boron oxide to adsorb the metal-containing compound.

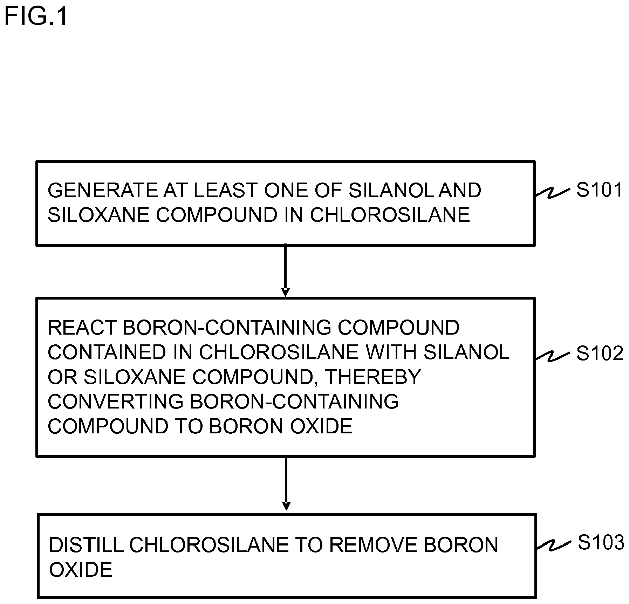

Figure 1 shows a flow chart for describing a step of removing a boron-containing compound through a method for purifying a chlorosilane according to the present invention.

First of all, at least one of silanol and a siloxane compound is generated in a chlorosilane (S101). The chlorosilane has, for example, a single composition of any one of SiCl₄, SiHCl₃, SiH₂Cl₂, SiH₃Cl, and SiH₄, or a mixed composition of a plurality of the single compositions.

In this step, for example, an inert gas having a moisture concentration of 0.5 to 2.5 ppm is brought into contact with the chlorosilane to dissolve the moisture, thereby generating at least one of the silanol and the siloxane compound through a hydration reaction of a moiety of the chlorosilane.

Or, silanol or a siloxane compound is generally contained in unpurified chlorosilane, and therefore an unpurified chlorosilane containing at least one of silanol and a siloxane compound may be added to the chlorosilane to be purified, thereby generating at least one of silanol and a siloxane compound in the chlorosilane.

Examples of the unpurified chlorosilane include an unpurified chlorosilane obtained by reacting metallic silicon with hydrochloric acid, an unpurified chlorosilane obtained by reacting metallic silicon with silicon tetrachloride, and an unreacted chlorosilane obtained in synthesis of polysilicon using trichlorosilane as a raw material.

Subsequently, a boron-containing compound and silanol or a siloxane compound contained in the chlorosilane are reacted, thereby converting the boron-containing compound to a boron oxide (S102). Examples of the boron-containing compound include boron chlorides and boron hydrides. It is to be noted that BCl₃ (boiling point of 13°C), B₂H₆ (boiling point of -87.5°C), etc. are known as a form of the boron compound in trichlorosilane synthesized from metallic silicon and hydrochloric acid, and in addition to these forms, the existence of BHCl₂ being a hydrogen-substituted compound of BCl₃ and B₂H₅Cl being a chlorine-substituted compound of B₂H₆ is foreseen.

Through the step (S102), the boron-containing compound being a low boiling point compound is converted to a boron oxide being a high boiling point compound, and therefore the difference in boiling point from the boiling point of the chlorosilane becomes larger to make later separation easy.

Finally, the chlorosilane is distilled to remove the boron oxide, thereby obtaining a purified chlorosilane (S103).

It is to be noted that, as described previously, the metal-containing compound contained in the chlorosilane can be converted to an addition compound by allowing the silanol, the siloxane compound, or the boron oxide to adsorb the metal-containing compound. Accordingly, step S102 can also be a step (step S202 described later) of allowing a boron oxide to adsorb a metal-containing compound contained in the chlorosilane, thereby converting the metal-containing compound to an addition compound, and step S103 can also be a step (step S203 described later) of removing the addition compound.

Through a step similar to the step described above, a metal-containing compound in the chlorosilane can also be removed.

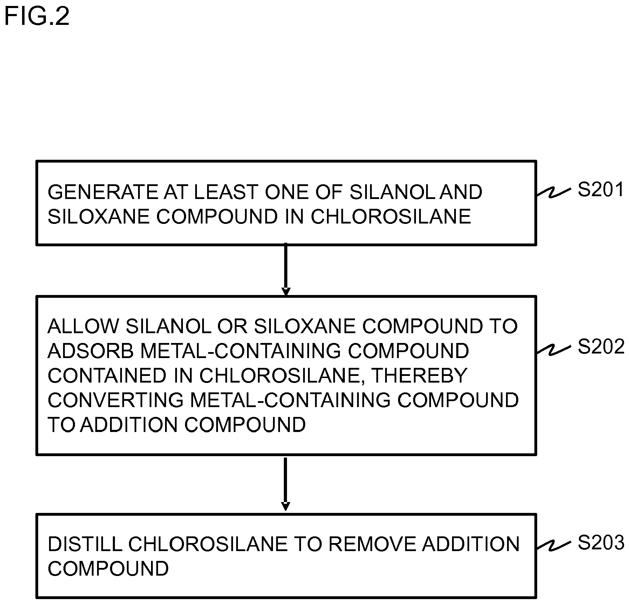

Figure 2 shows a flow chart for describing a step of removing a metal-containing compound through a method for purifying a chlorosilane according to the present invention.

First of all, at least one of silanol and a siloxane compound is generated in the chlorosilane (S201).

Also in this step, for example, an inert gas having a moisture concentration of 0.5 to 2.5 ppm is brought into contact with the chlorosilane to dissolve the moisture, thereby generating at least one of the silanol and the siloxane compound through a hydration reaction of a moiety of the chlorosilane.

Or, as described previously, an unpurified chlorosilane containing at least one of silanol and a siloxane compound may be added to a chlorosilane to be purified, thereby generating at least one of silanol and a siloxane compound in the chlorosilane.

Subsequently, a metal-containing compound contained in the chlorosilane is converted to an addition compound by allowing the silanol or the siloxane compound to adsorb the metal-containing compound (S202). Examples of the metal-containing compound include chlorides of any one of iron, chromium, nickel, copper, zinc, aluminum, calcium, and magnesium. Through this step, the metal-containing compound being a low boiling point compound is converted to the addition compound being a high boiling point compound to make later separation easy.

Finally, the chlorosilane is distilled to remove the addition compound, thereby obtaining a purified chlorosilane (S203).

As described above, one aspect of the present invention makes use of slight (several-ppm level) moisture contained in an inert gas (such as N₂, H₂, or Ar) the dew point of which is controlled, the inert gas used in usual processes, and therefore intended addition of moisture is not conducted. The inert gas as a process gas commonly used has a dew point of -70 to -80°C and a moisture concentration of 0.5 to 2.5 ppm, and when the moisture is brought into contact with the chlorosilane, the moisture dissolves in the chlorosilane to generate silanol or a siloxane compound. It is to be noted that the amount of moisture dissolving in the chlorosilane is about 0.2 ppm in terms of the concentration under a usual condition.

Moreover, in another aspect of the present invention, an unpurified chlorosilane containing at least one of silanol and a siloxane compound is added to a chlorosilane to be purified instead of generating silanol or a siloxane compound making use of the moisture. Silanol or a siloxane compound as an impurity originating from metallic silicon is contained in the unpurified chlorosilane (for example, an unpurified chlorosilane obtained by reacting metallic silicon with hydrochloric acid, an unpurified chlorosilane obtained by reacting metallic silicon with silicon tetrachloride, or an unreacted silicon obtained in synthesis of polysilicon using trichlorosilane as a raw material), and up to 100 ppm of silanol in terms of the OH concentration and 0.1 wt% of the siloxane compound in terms of the weight concentration are contained.

Examples of the concentration of silanol contained in an unpurified chlorosilane are listed in Table 1 for reference.

**[Table 1]**

| Trichlorosilane | OH (ppm) |
|---|---|
| Trichlorosilane immediately after synthesis (metallic silicon + hydrochloric acid) | 10-100 |
| Purified trichlorosilane | <0.1 |
| Trichlorosilane collected after synthesis of polysilicon | 10-50 |
| Trichlorosilane obtained by reacting silicon tetrachloride immediately after synthesis of polysilicon with metallic silicon | 0.1-20 |

Needless to say, at least one of silanol and a siloxane compound may be generated in a chlorosilane by making use of the two methods described above simultaneously.

When silanol or a siloxane compound is oxidized, a white powder is generated. The present inventors have taken out a sample from the white powder without bringing the sample into contact with oxygen to analyze the sample by TOF-SIMS, and have confirmed that silanol or a siloxane compound formed an addition compound with a boron oxide. Further, it has also been confirmed that metal impurities such as iron, chromium, and nickel contained in the form of chlorides are adsorbed to the boron oxide to form addition compounds, and the metal impurities are also adsorbed to silanol or the siloxane compound to form addition compounds.

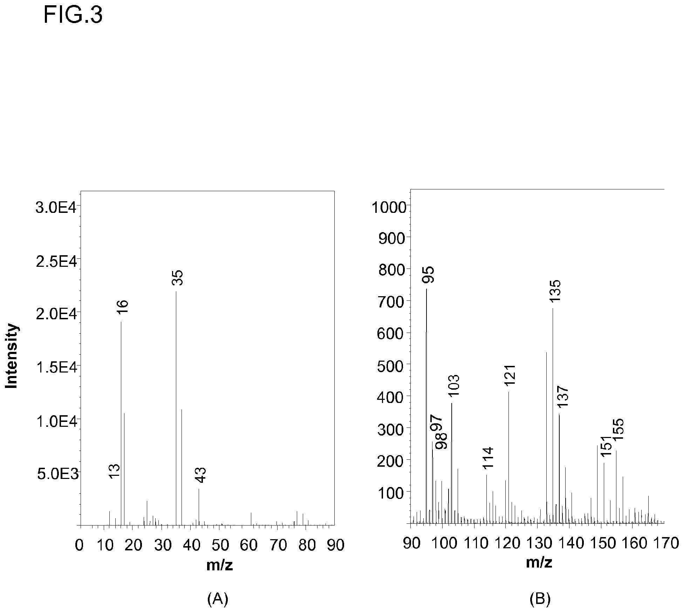

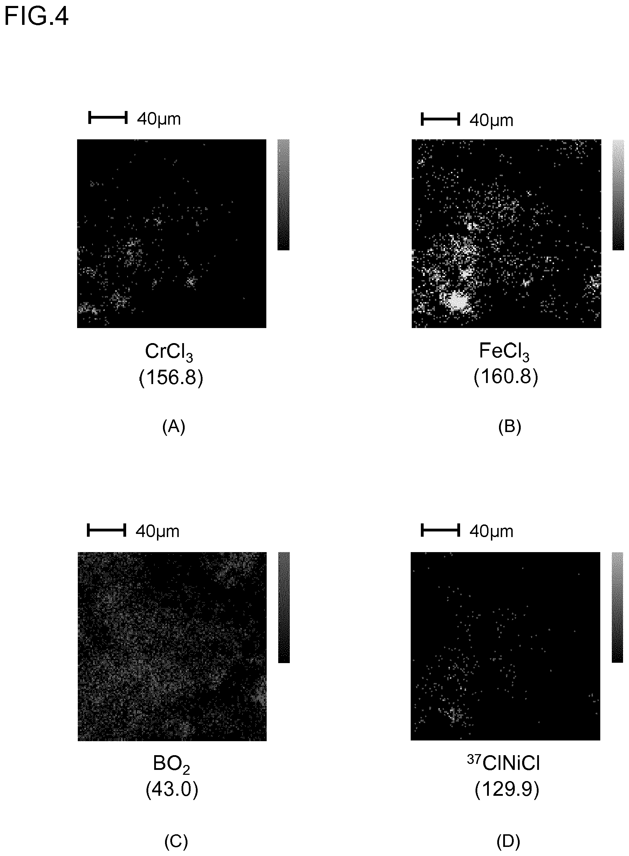

Figure 3 and Figure 4 show an example of a mass spectrum and mapping images obtained by analyzing the white powder described above by TOF-SIMS, respectively.

Fragments corresponding to mass (m/z) observed in the mass spectrum shown in Figure 3 are listed in Tables 2 to 4.

**[Table 2]**

| Boron compound | |
|---|---|
| m/z | Fragment |
| 43 | -BO₂ |
| 103 | -O-Si-O-BO₂ |
| 163 | -O-(SiO)₂-O-BO₂ |

**[Table 3]**

| Si compound | |
|---|---|
| m/z | Fragment |
| 95 | -O-SiCl-O- |
| 114 | -SiCl₂-O- |
| 121 | -O-Si(OH)-O-Si-O- or -O-SiH-O-SiO-O- |
| 133 | Si-Cl₃ |
| 137 | -O-SiO(OH)-O-Si-O- or -O-(O)SiH-O-SiO-O- |
| 149 | -SiCl₃-O- |
| 155 | -O-Si(Cl)-O-SiO-O- |

**[Table 4]**

| O, OH, Cl | |
|---|---|
| m/z | Fragment |
| 16 | -O- |
| 17 | -OH |
| 35 | -Cl |

With respect to the boron compound, the boron compound has a composition of "-O-(Si-O)ₙ-O-BO₂" as shown in Table 2, and takes a form of an oxide. It is to be noted that the upper limit of mass analysis by TOF-SIMS is m/z = 170, and therefore a compound in a form of an oxide having n = 3 or more in the formula above cannot experimentally be confirmed.

With respect to the Si compound, the number of oxygen increases as the number of Si increases as shown in Table 3, meaning that a siloxane polymer is formed.

The most important fact in the results shown here is that the boron impurity that has existed as chlorides or hydrides at the beginning changes into oxides and are bonded to silanol or siloxane. The boron compound that has dissolved in a chlorosilane solution reacts with silanol or siloxane to be taken in a white powder insolubilized to chlorosilane.

It is to be noted that it cannot be specified which atom in silanol the boron oxide is bonded to, and there is a possibility that the boron oxide is bonded to any of the atoms in silanol. Parent ions cannot be specified from the fragments measured by TOF-SIMS, however there may be a possibility that the boron compound and the Si compound each generating the detected fragments are the same molecule.

Moreover, each of the fragments of m/z = 127 and 137 cannot be specified as silanol or siloxane from the mass number.

From the mappings in Figure 4, situations that a chromium chloride (Figure 4 (A)), an iron chloride (Figure 4 (B)), a boron chloride (Figure 4 (C)), and a nickel chloride (Figure 4 (D)) are adsorbed to the white powder and taken in the addition compound can be found.

From these mapping results, it can be found that the distribution of the boron chloride (-BO₂) almost coincides with the distribution of the chlorides of the other three kinds of metals. The fact means that there is a possibility that the -BO₂ component (silanol or siloxane compound) is adhered (bonded) to the metal chlorides. It is to be noted that detection of metal oxides and metal hydroxides in addition to chlorides was tried, but any of the compounds were not detected.

Hereinafter, the method of verifying that the metal chlorides described above are adsorbed to silanol, the siloxane compound, or the compound represented by the general formula -O-(Si-O)ₙ-O-BO₂ to form addition compounds will be described.

Trichlorosilane obtained in such a way that 10 to 100 ppb of metal impurities (Fe, Cr, Ni, Cu, Zn, Al, Ca, and Mg) are added into sufficiently purified trichlorosilane is subjected to single distillation, and each metal component in the distillate (purified trichlorosilane) is quantitatively determined. It is to be noted that the quantitative determination of the metal components is conducted by ICP-MS.

The sufficiently purified trichlorosilane described above has an OH concentration of 0.1 ppm or less, a concentration of the siloxane compound of 0.01 ppm or less, and a boron concentration of 0.02 ppm or less, where the concentration of OH is obtained when the amount of OH in silanol and Si-OH is quantitatively determined by an infrared absorption method, and the concentration of the siloxane compound is obtained when measured by high-temperature GC.

In addition to these concentrations, the ratio of a metal concentration at the bottom of the single distillation column and a metal concentration in the distillate is determined also for trichlorosilane in which a white powder has been generated (white-powder-generated trichlorosilane).

The ratios of the concentration of a metal component left on the liquid side after conducting single distillation with a Teflon (R) container and the concentration of the metal component present on the distillate side are listed for each of the purified trichlorosilane and the white-powder-generated trichlorosilane described above in Table 5.

**[Table 5]**

| Concentration ratio: [concentration in liquid]/[concentration in distillate] | | | |
|---|---|---|---|
| | | Purified trichlorosilane | White-powder-generated trichlorosilane |
| Silanol (Si-OH) | ppm | <0.1 | 10 |
| Siloxane compound (HSiCl₂-O-SiCl₃) | ppm | <0.2 | 120 |
| Siloxane compound (SiCl₃-O-SiCl₃) | ppm | <0.3 | 60 |
| Boron (B) | ppm | <0.02 | 0.92 |
| Fe | Concentration ratio | 93 | 4,125 |
| Cr | Concentration ratio | 65 | 2,891 |
| Ni | Concentration ratio | 40 | 2,456 |
| Cu | Concentration ratio | 24 | 4,900 |
| Zn | Concentration ratio | 84 | 2,100 |
| Al | Concentration ratio | 58 | 2,354 |
| Ca | Concentration ratio | 12 | 1,987 |
| Mg | Concentration ratio | 24 | 3,452 |

The addition compounds described above are generated and insolubilized through the reaction between impurities in a liquid of chlorosilanes, and are nothing but compounds the boiling points of which are higher than those of the impurities to be removed, and therefore separation of the addition compounds from chlorosilanes becomes easy.

Consequently, according to the present invention, an impurity to be removed can be converted to a compound the boiling point of which is higher than the impurity and the compound can be insolubilized without adding a special adsorbent or the like which has been used in the conventional methods, and therefore chlorosilanes can efficiently be purified.

### Examples

Mixed trichlorosilanes (preparation raw materials) each having a different liquid composition were prepared as Examples 1 to 3 according to the following procedures.

First of all, metallic silicon and hydrochloric acid were reacted to obtain a synthetic liquid, and thereafter only the distillate of trichlorosilane was collected. The measured OH concentration in silanol in the trichlorosilane was 10 ppm. Apart from this, metallic silicon and silicon tetrachloride were reacted to generate trichlorosilane. The measured OH concentration in the trichlorosilane was 5 ppm.

Subsequently, the first trichlorosilane obtained through the reaction of metallic silicon with hydrochloric acid and the second trichlorosilane obtained through the reaction of metallic silicon with silicon tetrachloride were mixed. In the mixing, a N₂ gas (dew point of -70°C, moisture concentration of 2.5 ppm) was brought into contact with the mixed trichlorosilane.

At the stage (preparation raw materials) prior to distillation of the mixed trichlorosilane, the silanol concentration (OH concentration) was 8 to 10 ppm. With respect to the siloxane compound, the concentration of HSiCl₂-O-SiCl₃ was 80 to 120 ppm, the concentration of SiCl₃-O-SiCl₃ was 50 to 60 ppm. Moreover, the boron concentration was 140 to 9000 ppb.

When the mixed trichlorosilane solution was subjected to single distillation, a white solid powder was observed in the bottom liquid. It is to be noted that the amount was 5 ppm relative to the weight of the bottom liquid.

As Comparative Example 1 and Comparative Example 2, trichlorosilanes having a boron concentration of 850 ppb and 90 ppb respectively at the stage (preparation raw material) prior to distillation were prepared, and the trichlorosilanes were each subjected to single distillation without bringing a N₂ gas (dew point of - 70°C, moisture concentration of 2.5 ppm) into contact with each of the trichlorosilanes. It is to be noted that both concentrations of silanol and a siloxane compound in these trichlorosilanes (preparation raw materials) before distillation were less than 0.1 ppm.

The results of analyzing the composition of distillate obtained by single distillation (60°C) for each of Examples 1 to 3 and Comparative Examples 1 and 2 are shown in Table 6. The metal concentration shown in Table 6 is the total concentration of iron, chromium, nickel, copper, zinc, aluminum, calcium, and magnesium.

**[Table 6]**

| | Preparation stock solution | | | | | Distillate | |
|---|---|---|---|---|---|---|---|
| | Boron (ppb) | Metals (ppb) | Silanol SiOH (ppm) | Siloxane compound HSiCl₂ O SiCl₃ (ppm) | Siloxane compound SiCl₃ O SiCl₃ (ppm) | Boron (ppb) | Metals (ppb) |
| Example 1 | 9,000 | 1,076 | 10 | 100 | 60 | 1 | 0.4 |
| Example 2 | 920 | 149 | 10 | 120 | 60 | 0.5 | <0.1 |
| Example 3 | 140 | 13 | 8 | 80 | 50 | <0.5 | <0.1 |
| Comparative Example 1 | 850 | 980 | <0.1 | <0.1 | <0.1 | 821 | 20 |
| Comparative Example 2 | 90 | 250 | <0.1 | <0.1 | <0.1 | 88 | 4 |

In any of Examples 1 to 3, the concentrations of the boron impurity and metal impurities are remarkably lowered through distillation.

With respect to the boron impurity for example, the boron concentration in the preparation stock solution is about the same in Example 2 and Comparative Example 1, however the lowering of boron concentration in the distillate is hardly observed in Comparative Example 1, while the boron concentration is reduced to 0.5 ppb in Example 2. The tendency is the same in Example 3 and Comparative Example 2. In Example 1, the boron concentration in the preparation stock solution is reduced through distillation from 9000 ppb to 1 ppb.

With respect to metal impurities, the metal concentration in the preparation stock solution is about the same in Example 1 and Comparative Example 1, however the metal concentration in the distillate is 20 ppb in Comparative Example 1 while the metal concentration in the distillate is reduced to 0.4 ppb in Example 1. Moreover, the metal concentration in the distillate is reduced to less than detection limit (0.1 ppb) through distillation in Examples 2 and 3.

In the present invention, silanol or siloxane is utilized as described above, and therefore it is not necessary to use an adsorbent or the like.

Moreover, a high concentration of moisture is not supplied in generating at least one of silanol and a siloxane compound in a chlorosilane, and therefore it never happens that excessive moisture is left in the distillate to generate silanol or a siloxane compound in a distillation step.

According to the present invention, at least one of silanol and a siloxane compound are generated in a chlorosilane to be purified, and the silanol and/or the siloxane compound are allowed to adsorb a boron-containing compound or a metal-containing compound, thereby converting the compound to an addition compound, followed by removal of impurities, and therefore chlorosilanes can be purified at low cost and in a highly efficient manner without using an additional adsorbent or additive which has been used in conventional methods and, moreover, without including an additional step for supplying moisture, which has been included in the conventional methods.

### Industrial Applicability

The present invention provides a novel technique for separating and removing boron impurities and metal impurities at low cost and in a highly efficient manner in the purification of chlorosilanes.

## Claims

1. A method for purifying a chlorosilane by removing a boron-containing compound in the chlorosilane, comprising the following steps A to C:
step A of generating at least one of silanol and a siloxane compound in the chlorosilane;
step B of reacting a boron-containing compound comprised in the chlorosilane with the silanol or the siloxane compound, thereby converting the boron-containing compound to a boron oxide; and
step C of distilling the chlorosilane to remove the boron oxide.

2. The method for purifying a chlorosilane according to claim 1, wherein step B is also a step of allowing the boron oxide to adsorb a metal-containing compound comprised in the chlorosilane, thereby converting the metal-containing compound to an addition compound, and step C is also a step of removing the addition compound.

3. A method for purifying a chlorosilane by removing a metal-containing compound in the chlorosilane, comprising the following steps D to F:
step D of generating at least one of silanol and a siloxane compound in the chlorosilane;
step E of allowing the silanol or the siloxane compound to adsorb the metal-containing compound comprised in the chlorosilane, thereby converting the metal-containing compound to an addition compound; and
step F of distilling the chlorosilane to remove the addition compound.

4. The method for purifying a chlorosilane according to any one of claims 1 to 3, wherein, in step A or step D, an inert gas having a moisture concentration of 0.5 to 2.5 ppm is brought into contact with the chlorosilane to dissolve the moisture, thereby generating at least one of the silanol and the siloxane compound through a hydration reaction of a moiety of the chlorosilane.

5. The method for purifying a chlorosilane according to any one of claims 1 to 3, wherein, in step A or step D, an unpurified chlorosilane comprising at least one of silanol and a siloxane compound is added to the chlorosilane to generate at least one of the silanol and the siloxane compound in the chlorosilane.

6. The method for purifying a chlorosilane according to claim 5, wherein the unpurified chlorosilane is at least one of an unpurified chlorosilane obtained by reacting metallic silicon with hydrochloric acid, an unpurified chlorosilane obtained by reacting metallic silicon with silicon tetrachloride, and an unreacted chlorosilane obtained in synthesis of polysilicon using trichlorosilane as a raw material.

7. The method for purifying a chlorosilane according to claim 1 or 2, wherein the boron-containing compound is at least one compound of a boron chloride and a boron hydride.

8. The method for purifying a chlorosilane according to claim 3, wherein the metal-containing compound is at least one chloride of chlorides of any one of iron, chromium, nickel, copper, zinc, aluminum, calcium, and magnesium.

9. The method for purifying a chlorosilane according to any one of claims 1 to 3, wherein the chlorosilane has a single composition of any one of SiCl₄, SiHCl₃, SiH₂Cl₂, SiH₃Cl, and SiH₄, or the chlorosilane has a mixed composition of a plurality of the single compositions.
